# EUROPÄISCHE PATENTSCHRIFT

(11) **EP 2 709 796 B1**
(45) Veröffentlichungstag und Bekanntmachung des Hinweises auf die Patenterteilung: **17.09.2014**
(21) Anmeldenummer: 12762520.0
(22) Anmeldetag: 18.05.2012
(51) Int. Cl.: B24B 1/04

(54) **SCHWINGVORRICHTUNG MIT WERKSTÜCKAUFNAHME UND AUSGLEICHSMASSE, UND VERFAHREN**
OSCILLATING DEVICE WITH WORKPIECE HOLDER AND COMPENSATING MASS, AND METHOD
DISPOSITIF OSCILLANT À LOGEMENT DE PIÈCE ET À MASSE D'ÉQUILIBRAGE, ET PROCEDE

(30) Priorität: 18.05.2011 AT 7062011
(43) Veröffentlichungstag der Anmeldung: 26.03.2014
(73) Patentinhaber: Technische Universität Wien, 1040 Wien (AT)
(72) Erfinder: BLEICHER, Friedrich, A-1140 Wien (AT); BERNREITER, Johannes, A-2231 Strasshof (AT)
(74) Vertreter: Sonn & Partner Patentanwälte
(86) Internationale Anmeldenummer: PCT/AT2012/000137
(87) Internationale Veröffentlichungsnummer: WO 2012/167288

(56) Entgegenhaltungen:
- EP-A1- 0 323 518
- US-A1- 2004 008 331

## Beschreibung

Die Erfindung betrifft eine Vorrichtung mit einer Werkstückaufnahme zur Aufnahme eines mechanisch zu bearbeitenden Werkstücks, wobei mit der Werkstückaufnahme zumindest eine Schwingvorrichtung in Verbindung steht und die Schwingvorrichtung die Werkstückaufnahme in Schwingung versetzt, wobei die Schwingung der Werkstückaufnahme eine Frequenz aufweist, die niedriger ist als die Frequenz von Ultraschall, sowie ein Verfahren zur mechanischen Bearbeitung eines Werkstücks, wobei das Werkstück in Schwingung versetzt wird und die Frequenz der Schwingung des Werkstücks niedriger ist als die Frequenz von Ultraschall.

Im Stand der Technik sind verschiedenste Vorrichtungen und Verfahren zur sogenannten Hybridbearbeitung bzw. Ultraschall-unterstützten Bearbeitung bekannt. Hierbei wird üblicherweise ein Werkzeug im Ultraschallbereich in Schwingung versetzt, wobei als Schwingungsfrequenz vorzugsweise die Eigenfrequenz des Werkzeugs gewählt wird, sodass gewollterweise Resonanzschwingungen auftreten, durch welche insbesondere bei der spanenden Bearbeitung eines Werkstücks eine unterstützende Wirkung erzielt wird.

Ein im Ultraschallbereich angeregtes Werkzeug ist beispielsweise aus der Publikation "Modeling of material removal rate in rotary ultrasonic machining: designed experiments" von P. Hu, J.M. Zhang, Z.J. Pei, und Clyde Treadwell bekannt, das im Journal of Materials Processing Technology 129, 2002, 339-344 veröffentlicht wurde. Weiters sind aus der Publikation "Entwicklung eines neuartigen Ultraschallsystems zur Realisierung flexibler ultraschallunterstützter Zerspannung" von T.Tawakoli, B. Azarhoushang, N. Jandaghi, veröffentlicht in dem Journal "Wissenschaft & Forschung" 2010, 28-33, verschiedene Varianten zur Schwingungsanregung auf der Werkstückseite bekannt, welche über Resonatoren im Ultraschallbereich Werkstücke anregen.

Weiters sind aus dem Stand der Technik, z.B. aus der US 7,802,355 B2, bereits andersartige Vibrationstische zum Verteilen von Asphalt und dergl. bekannt.

In der EP 0 323 518 A1 ist ein Rahmen mit einer darin gelagerten Platte samt Werkstückaufnahme gezeigt, wobei die Platte mit dem Rahmen durch Piezoelemente verbunden ist. Durch eine getrennte Ansteuerung der Piezoelemente kann die Platte und mit ihr das Werkstück in horizontale, vertikale oder drehende Schwingung versetzt werden. Die vorgesehene Frequenz der erzeugten Vibration beträgt dabei nicht mehr als 1500 Hz.

Die US 2004/008331 A1 zeigt einen Apparat für Fotolithografie mit einem Basisrahmen und einem Substrattisch, welcher gegenüber einer mit dem Basisrahmen verbundenen Belichtungseinheit bewegt wird. Der Substrattisch ist dabei nicht direkt, sondern über eine Ausgleichsmasse mit dem Basisrahmen verbunden, wobei die Verbindung zwischen Ausgleichsmasse und Basisrahmen elastisch ist.

Aufgabe der vorliegenden Erfindung ist es, ein Verfahren und eine Vorrichtung zur mechanischen Bearbeitung von Werkstücken zu schaffen, mit welchem bzw. welcher verschiedenste mechanische Bearbeitungsvorgänge an einem Werkstück durch eine bzw. mit Hilfe einer schwingenden Bewegung des Werkstücks selbst durchgeführt werden können. Im Gegensatz zu bekannten Schwingvorrichtungen, bei welchen oftmals die Erzielung einer Resonanzschwingung gewünscht ist, soll bei der erfindungsgemäßen Vorrichtung eine Resonanzschwingung vermieden werden, da dies zur Beschädigung der Vorrichtung führen könnte, und demnach die Frequenz ohne Gefahr einer Beschädigung frei gewählt werden können.

Dies wird erfindungsgemäß dadurch erzielt, dass die Schwingvorrichtung einen Schwingkörper aufweist, dem eine in entgegengesetzter Richtung schwingende Ausgleichsmasse zugeordnet ist. Mit Hilfe der zum Schwingkörper der Schwingvorrichtung gegengleich schwingenden Ausgleichsmasse kann somit eine Impulsentkoppelung erzielt werden, sodass unabhängig von der Eigenfrequenz der Werkstückaufnahme bzw. der gesamten Vorrichtung jede beliebige Frequenz zur Bearbeitung des Werkstücks eingestellt werden kann.

Die erfindungsgemäße Vorrichtung, bei welcher die Werkstückaufnahme mittels einer Schwingvorrichtung in Schwingung versetzt wird, die eine niedrigere Frequenz als die Frequenz von Ultraschall aufweist, kann zu verschiedensten Zwecken eingesetzt werden.

Einerseits kann ein in der Werkstückaufnahme aufgenommenes Werkstück durch eine entsprechende Ansteuerung der Schwingvorrichtung einer helikalen oder trochoiden Bearbeitung unterzogen werden.

Weiters kann die Vorrichtung auch zur Hybridbearbeitung, d.h. dem schwingungsunterstützten mechanischen Bearbeiten von in der Werkstückaufnahme befestigten Werkstücken, eingesetzt werden. Unter mechanischen Bearbeitungen im Zusammenhang mit der vorliegenden Erfindung sind insbesondere jede spanende Bearbeitung mit geometrisch bestimmter oder geometrisch unbestimmter Schneide zu verstehen; dies umfasst insbesondere Drehen, Bohren, Fräsen, Reiben sowie Schleifen, Honen, Läppen und Polieren.

Sofern die Frequenz entsprechend niedrig gewählt wird, kann mit Hilfe der Schwingvorrichtung die Vorrichtung selbstverständlich auch zur Positionierung des in der Werkstückaufnahme angeordneten Werkstücks verwendet werden.

Insbesondere kann die Vorrichtung - ähnlich bekannten Vorrichtungen, bei welchen jedoch das Werkzeug im Ultraschallbereich angeregt wird - zur Unterstützung der mechanischen Bearbeitung von schwierig zu bearbeitenden Materialien, d.h. insbesondere harten und/oder spröden Materialien, wie z.B. Keramik, Glas, verschiedenste Silizium-Werkstoffe, wie Siliziumnitrid oder Siliziumoxid, aber auch gehärtetem Stahl oder dergl, eingesetzt werden. Für die verschiedensten Anwendungen hat es sich als günstig herausgestellt, wenn die Frequenz der Schwingung der Werkstückaufnahme unter 10 kHz, vorzugsweise unter 5 kHz, insbesondere unter 1 kHz, besonders bevorzugt zwischen 500 Hz und 50 Hz beträgt.

Zur Kompensation der Trägheitskräfte des Schwingkörpers, kann die Ausgleichsmasse eine zum Schwingkörper idente Masse aufweisen; in diesem Fall wird die Ausgleichsmasse mit der gleichen Frequenz und der gleichen Beschleunigung wie der Schwingkörper, jedoch mit entgegengesetzter Bewegungsrichtung in Schwingung versetzt. Wenn Schwingkörper und Ausgleichsmasse nicht die gleiche Masse aufweisen, kann ein kompensierender Trägheitseffekt über eine Anpassung der Beschleunigung erzielt werden. Sofern die Ausgleichsmasse eine geringere Masse als der Schwingkörper aufweist, ist es zum Impulsausgleich demzufolge vorteilhaft, wenn die Ausgleichsmasse mit der gleichen Frequenz wie und einer größeren Amplitude als der Schwingkörper schwingt. Demzufolge schwingt die Ausgleichsmasse mit der gleichen Frequenz wie der Schwingkörper, weist jedoch eine höhere Beschleunigung auf und legt somit bei gleicher Frequenz einen größeren Weg zurück.

Aufgrund der konstruktiven Gegebenheiten hat sich insbesondere als vorteilhaft herausgestellt, wenn das Verhältnis der Amplituden der Schwingungen der Ausgleichsmasse und des Schwingkörpers zwischen [1]:[5] und [5]:[1], im Wesentlichen [1]:[1], beträgt.

Um Schwingungen der Werkstückaufnahme im gewünschten Frequenzbereich auf einfache und zuverlässige Weise zu erzielen, ist es von Vorteil, wenn die Schwingvorrichtung zumindest ein Piezoelement aufweist.

Um auf einfache Art und Weise jede beliebige Art der Schwingung des Schwingkörpers in einer Ebene erzielen zu können, d.h. z.B. eine kreisende, diagonale, etc. Form der Schwingbewegung, ist es von Vorteil, wenn zur Verschiebung des Schwingkörpers in einer Ebene zumindest zwei, vorzugsweise senkrecht zueinander angeordnete Bewegungsrichtungen aufweisende, Piezoelemente vorgesehen sind. Hinsichtlich einer konstruktiv einfachen Ausgestaltung der Vorrichtung, bei welcher mittels der Piezoelemente die gewünschten Amplituden erzielt werden können, ist es günstig, wenn zur Verschiebung des Schwingkörpers in eine Richtung dem Schwingkörper zumindest jeweils zwei Piezoelemente zugeordnet sind. Hierbei können sich die Piezoelemente jeweils auf einfache Weise einerseits außenseitig an einem die Schwingvorrichtung umgebenden Gehäuse und andererseits an einem vorzugsweise im Wesentlichen mittig angeordneten Anlagevorsprung am Schwingkörper abstützten.

Zur Erzielung der gewünschten Trägheitsimpulsentkopplung ist es hinsichtlich einer einfachen Regelung von Vorteil, wenn an der Ausgleichsmasse im Wesentlichen die gleiche Art und Anzahl an Piezoelementen angreift wie an dem Schwingkörper.

Um die gewünschte Impulsentkoppelung der Schwingvorrichtung zu erzielen, ist es von Vorteil, wenn eine Steuer- bzw. Regelvorrichtung vorgesehen ist, mit welcher gegengleiche Bewegungen der Piezoelemente, welche dem Schwingkörper zugeordnet sind, und jener Piezoelemente, die der Ausgleichsmasse zugeordnet sind, gesteuert bzw. geregelt werden. Hierbei ist es von Vorteil, wenn dem Schwingkörper und der Ausgleichsmasse Weg- und/oder Beschleunigungssensoren zugeordnet sind, deren Messwerte als Ist-Größen der Steuer- bzw. Regelvorrichtung zugeführt werden.

Um Reibungsverluste bei den Schwingungsbewegungen des Schwingkörpers und der Ausgleichsmasse möglichst gering zu halten, ist es günstig, wenn der Schwingkörper und/oder die Ausgleichsmasse auf zumindest einem Luftlager gelagert sind.

Um auf das Werkstück bzw. die Werkstückaufnahme eingeleitete Drehmomente zweckmäßig aufnehmen zu können, ist es günstig, wenn eine plattenförmige Werkstückaufnahme vorgesehen ist, die auf einer Deckplatte eines Grundkörpers, vorzugsweise mittels eines Luftlagers, gelagert ist. Somit ist die plattentförmige Werkstückaufnahme, auch Maschinentisch genannt, direkt auf einer benachbarten Deckplatte gelagert, sodass etwaigen Kippkräften, die auf die Werkstückaufnahme wirken, kein Hebel geboten wird.

Um die aus den Bewegungskräften resultierenden Momente weiter zu reduzieren, ist es günstig, wenn die plattenförmige Werkstückaufnahme mit einer Gegenplatte fest verbunden ist, wobei zwischen der plattenförmigen Werkstückaufnahme und der Gegenplatte die Ausgleichmasse angeordnet ist.

Hinsichtlich der Verwendung bei der mechanischen Bearbeitung von Werkstücken ist es zwecks Ausrichtung der Werkstückaufnahme in verschiedensten Orientierungen von Vorteil, wenn die Vorrichtung auf einer Positioniervorrichtung angeordnet ist. Hierbei ist es insbesondere günstig, wenn bis zu fünf Achsen der Positioniervorrichtung verstellbar sind, da hierdurch eine beliebige Ausrichtung der Werkstückaufnahme in alle erdenklichen Richtungen möglich ist.

Wenn zumindest eine Schwingungsrichtung der Schwingvorrichtung abweichend von einer Bewegungsrichtung eines spanenden Werkzeugs, vorzugsweise Fräswerkzeugs, ist, kann die Vorrichtung beispielsweise nur in einer Ebene bewegt werden, zugleich wird jedoch aufgrund der abweichenden Schwingungsrichtung gegenüber der Bewegung des Werkzeugs eine räumliche Veränderung gegenüber dem Werkzeug erzielt.

Tests haben gezeigt, dass es insbesondere vorteilhaft ist, wenn ein mittels einer Kühlflüssigkeit gekühltes zur spanenden Bearbeitung vorgesehenes Werkzeug, vorzugsweise Fräswerkzeug, vorgesehen ist. Dabei hat sich herausgestellt, dass aufgrund der Schwingungen des in bzw. auf der Werkstückaufnahme aufgenommenen Werkstücks ein deutlich verbessertes Spülverhalten der mit Spänen versetzten Kühlflüssigkeit erzielt wird, sodass es zu einem deutlich verbesserten Abtransport des von dem Werkstück bereits abgetragenen Materials kommt. Tests wurden hierbei insbesondere im Zusammenhang mit plattenförmigen, keramischen Materialien durchgeführt.

Das Verfahren der eingangs angeführten Art ist dadurch gekennzeichnet, dass zur Vermeidung von Resonanzschwingungen des Werkstücks und der Werkzeugmaschine der zur Erzeugung der Schwingung eingeleitete Impuls mittels einer in entgegengesetzter Richtung schwingenden Ausgleichsmasse aktiv entkoppelt wird, wobei vorzugsweise die Frequenz der Schwingung des Werkstücks unter 10 kHz, vorzugsweise unter 5 kHz, insbesondere unter 1 kHz, besonders bevorzugt zwischen 500 Hz und 50 Hz beträgt. Die im Zusammenhang mit dem erfindungsgemäßen Verfahren erzielten vorteilhaften Effekte sind bereits im Zusammenhang mit der korrespondierenden Vorrichtung erläutert, sodass zwecks Vermeidung von Wiederholungen hierauf verwiesen wird.

Wenn die Ausgleichsmasse eine geringere Masse als der Schwingkörper aufweist, schwingt die Ausgleichsmasse zur Impulsentkopplung vorteilhafterweise mit der gleichen Frequenz und einer größeren Amplitude als der Schwingkörper. Die Impulsentkopplung ist hierbei vorteilhafterweise aktiv geregelt, wie bereits im Zusammenhang mit der erfindungsgemäßen Vorrichtung beschrieben.

Die Erfindung wird nachstehend anhand von in den Zeichnungen dargestellten bevorzugten Ausführungsbeispielen, auf die sie jedoch nicht beschränkt sein soll, noch näher erläutert. Im Einzelnen zeigen in den Zeichnungen:
Fig. 1 eine perspektivische Ansicht der Vorrichtung mit einer Werkstückaufnahme;
Fig. 2 eine perspektivische Ansicht der Vorrichtung gemäß Fig. 1 mit abgenommener Werkstückaufnahme und einer abgenommenen Deckplatte;
Fig. 3 eine perspektivische Ansicht gemäß Fig. 2 mit einer teilweise aufgebrochenen Seitenwand eines Gehäuses;
Fig. 4 eine perspektivische Schnittansicht der Vorrichtung gemäß den Fig. 1 bis 3;
Fig. 5 eine schematische Ansicht eines Regelkreises zur Regelung einer Impulsentkoppelung;
Fig. 6 eine schematische Ansicht einer Positioniervorrichtung, auf welcher eine erfindungsgemäße Vorrichtung angeordnet ist;
Fig. 7 eine Schnittansicht eines alternativen Aufbaus der erfindungsgemäßen Vorrichtung;
Fig. 8a bis 8d schematische Seitenansichten eines auf der Vorrichtung aufgenommenen Werkstücks, welches über eine Fräsvorrichtung bearbeitet wird; und
Fig. 9 eine schematische Detailansicht gemäß Detail VIII in Fig. 8a.

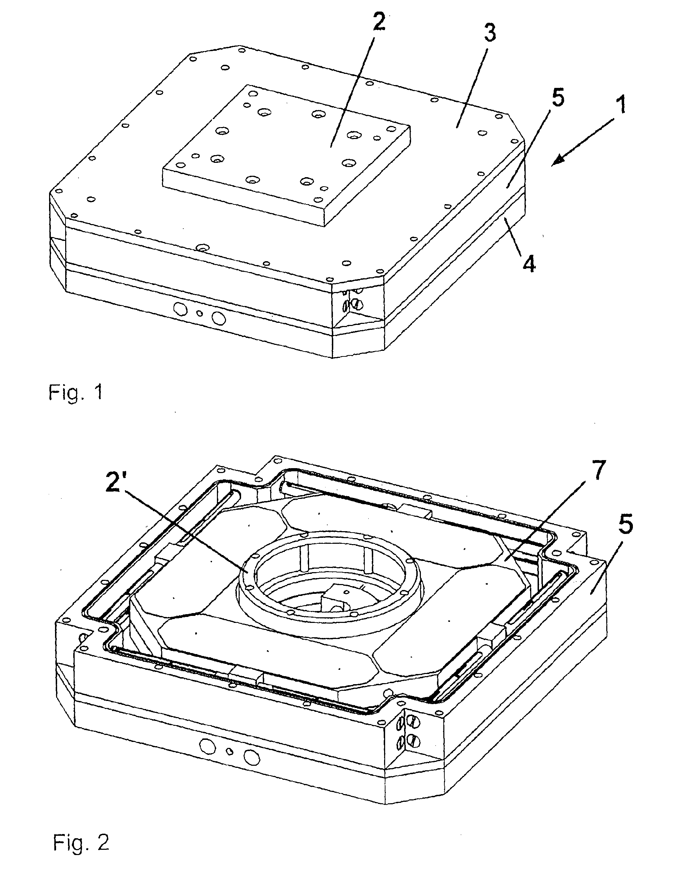

In Fig. 1 ist schematisch eine Vorrichtung 1 mit einer Werkstückaufnahme 2 gezeigt, wobei ersichtlich ist, dass die Vorrichtung 1 eine obere Deckplatte 3 und eine untere Deckplatte 4 aufweist, zwischen welchen ein umlaufendes Gehäuse 5 aufgenommen ist.

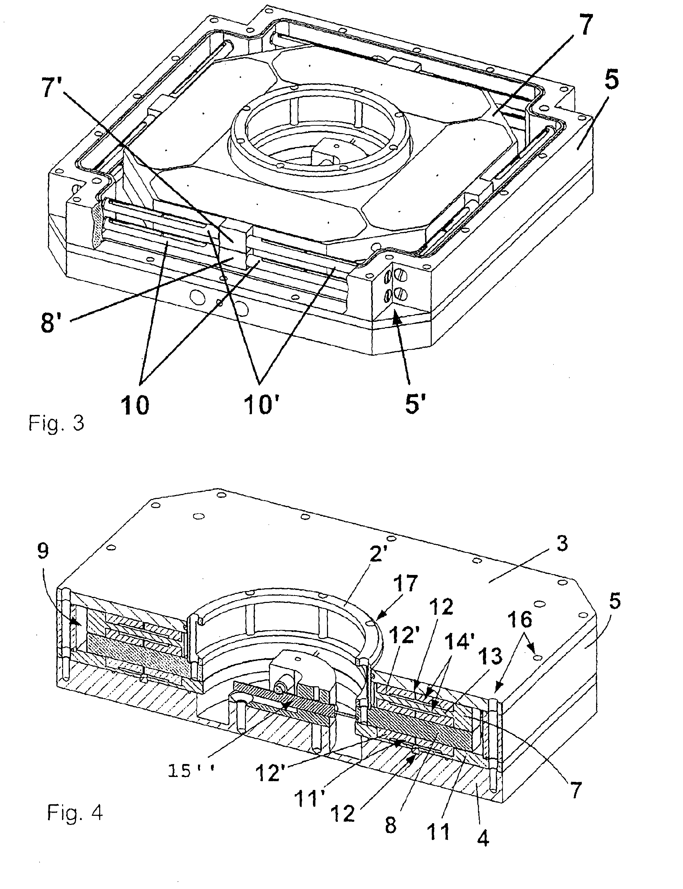

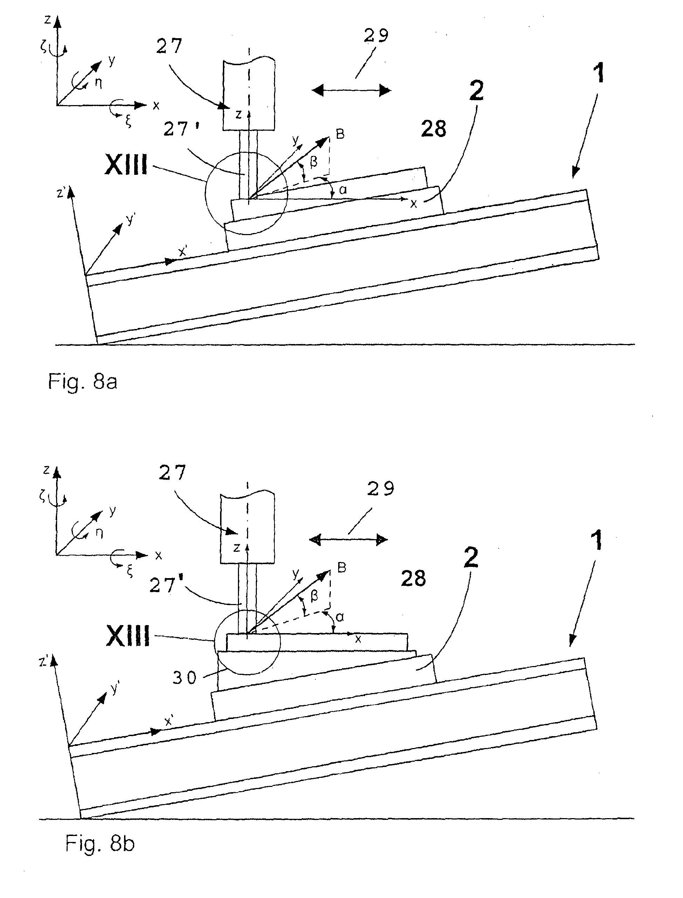

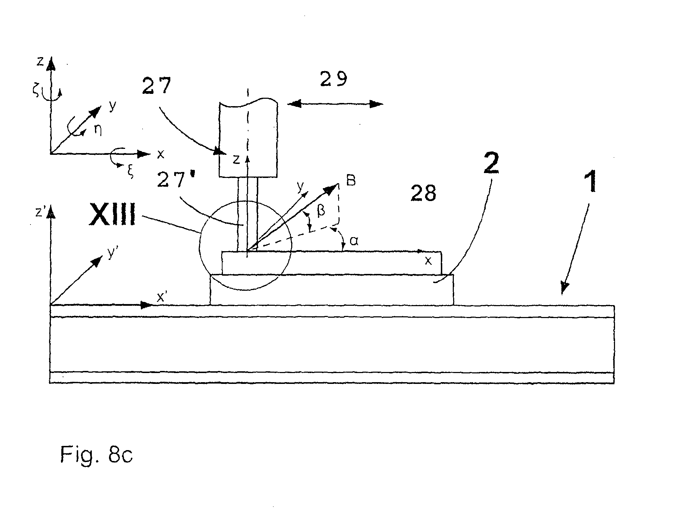

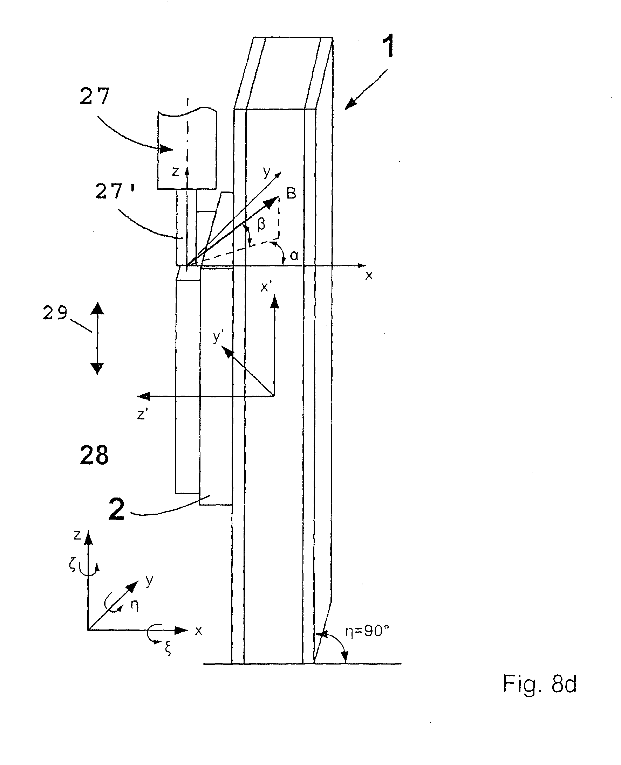

Zwischen der oberen und unteren Deckplatte 3, 4 und innerhalb des Gehäuses 5 ist, wie in Fig. 2 ersichtlich, eine Ausgleichsmasse 7 aufgenommen. Die Ausgleichsmasse 7 ist dazu vorgesehen, von einem Schwingkörper 8 (vgl. Fig. 4) eingeleitete Trägheitsimpulse aktiv zu entkoppeln, sodass insbesondere Resonanzschwingungen in einer Werkzeugmaschine (vgl. Fräse 27 in Fig. 8a bis 8d), die ein Werkzeug 27' zur Bearbeitung eines auf der Vorrichtung 1 befestigten Werkstücks 28 (vgl. Fig. 8a bis 8d) aufweist, vermieden werden.

Der Schwingkörper 8 wie auch die Ausgleichsmasse 7 sind Teil einer in dem Gehäuse 5 aufgenommenen Schwingvorrichtung 9, die dazu vorgesehen ist, die Werkstückaufnahme 2 in Schwingung zu versetzen. Hierzu ist die in Fig. 1 gezeigte Werkstückaufnahme 2 über ein in Fig. 4 ersichtliches, vorzusgweise zylindrisches Verbindungselement 2' mit dem Schwingkörper 8 fest verbunden.

Die Schwingvorrichtung 9 weist als Aktuatoren stabförmige Piezoelemente 10, 10' auf, die insbesondere in Fig. 3 ersichtlich sind. Hierbei sind auf jeder Seite des vorzugweise im Wesentlichen quadratisch ausgebildeten Gehäuses 5 jeweils zwei stabförmige Piezoelemente 10, 10' vorgesehen.

Die Piezoelemente 10 versetzen hierbei den Schwingkörper 8 (einschließlich der Werkstückaufnahme 2) in die gewünschte Schwingung, die darüber angeordneten Piezoelement 10' hingegen die Ausgleichsmasse 7. Die Piezoelemente 10, 10' stützen sich jeweils einerseits an dem Gehäuse 5 ab, welches hiefür in den Eckbereichen eine Einbuchtung 5' aufweist, und andererseits an im Wesentlichen mittig angeordneten Anlagevorsprüngen 8' bzw. 7' des Schwingkörpers 8 bzw. der Ausgleichsmasse 7.

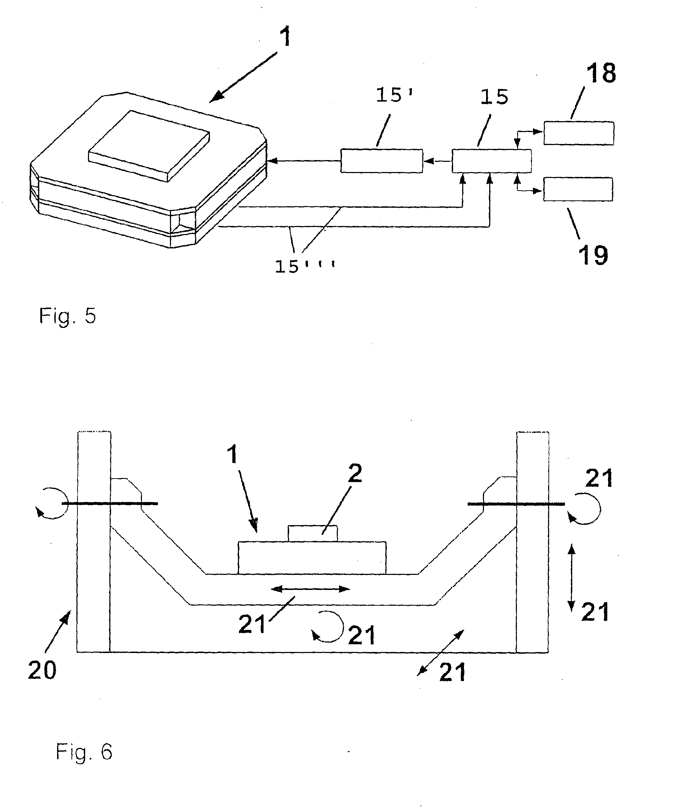

Die beiden an einer Längsseite angeordneten Piezoelemente 10 bzw. 10' sind hierbei derart zusammengeschaltet, dass sie in entgegengesetzter Richtung von einer Steuer- bzw. Regelvorrichtung 11 (vgl. Fig. 5) angesteuert werden. Hierbei sind in jedem stabförmigen Piezoelement 10, 10', das jeweils zwischen dem Gehäuse 5 und dem Anlagevorsprung 7' bzw. 8' angeordnet ist, jeweils zwei sog. Piezostacks in einem stabförmigen Piezoelement 10, 10' zusammengefasst; derartige Piezostacks sind im Handel erhältlich und werden z.B. zur Ansteuerung von Einspritzdüsen in der Automobilindustrie eingesetzt. Mittels derartiger Piezoelemente 10, 10', die aus zwei Piezostacks zusammengesetzt sind, können Schwingungen, deren Amplitude bis +/- 60 µm beträgt, vorzugsweise +/- 20 µm, erzielt werden. Auf der gegenüberliegenden Seite sind ebenfalls jeweils zwei Piezoelemente 10, 10' vorgesehen, welche gleich angesteuert werden, wie die auf der gegenüberliegenden Seite des Schwingkörpers 8 bzw. der Ausgleichsmasse 7 angeordneten Piezoelemente 10, 10'. Die im Wesentlichen in einem rechten Winkel hierzu angeordneten Piezoelemente 10, 10' werden hingegen unabhängig angesteuert, sodass der Schwingkörper 8 bzw. die Ausgleichsmasse 7 jede beliebige Bewegung, z.B. eine diagonale, oder eine kreisförmige Bewegung, ausführen können.

Zur Ausbildung von Luftlagern 12 ist in einer Auflageplatte 11 des Schwingkörpers 8 eine Ausnehmung 11' vorgesehen, in welcher ein planares Gleitlager-Element 12', vorzugsweise aus einem Karbon-Material, aufgenommen ist. Die Ausgleichsmasse 7 ist im Querschnitt im Wesentlichen I-förmig ausgebildet, sodass in dem Bereich zwischen den beiden Querschenkeln, ober- und unterhalb eines Verbindungsschenkels 13 jeweils eine Aufnahmekammer 14' ausgebildet ist, in der ebenfalls jeweils planare Gleitlager-Elemente 12' zur Ausbildung eines Luftlagers 12 aufgenommen sind. In den Aufnahmekammern 11' bzw. 14' wird über eine nicht näher gezeigte Luftzufuhrleitung Druckluft mit einem Druck von ca. 2 bis 6 bar eingeleitet, sodass der Schwingkörper 8 und die Ausgleichsmasse 7 im Wesentlichen reibungsfrei schwingen können.

In einer von dem Verbindungselement 2' definierten mittigen Ausnehmung kann eine Zu- und Abfuhr von Druckluft in die bzw. aus den Ausnehmungen 11', 14' der Luftlager 12 erfolgen. Zudem könnte in dieser Ausnehmung auch noch ein weiterer Aktuator zwecks Schwingungsanregung in einer vertikalen z-Richtung vorgesehen sein, sodass mit Hilfe der Vorrichtung nicht nur über die im Wesentlichen parallel zu den Deckplatten 3, 4 angeordneten Piezoelemente 10, 10' in x- und y-Richtung jede beliebige Schwingung, z.B. eine diagonale, eine kreisförmige, sinusförmige Schwingung oder dergl, durchgeführt werden kann, sondern zudem auch in Normalrichtung auf diese Ebene eine zusätzliche Schwingung der Werkstückaufnahme 2 in z-Richtung erzielt werden kann. Die Schwingvorrichtung 9 weist somit vier Freiheitsgrade auf - mit Berücksichtigung der Rotation um die z-Richtung.

Wie der Schnittdarstellung in Fig. 4 weiters zu entnehmen ist, werden die untere Deckplatte 4, die Basisplatte 11, das Gehäuse 5 und die obere Deckplatte 3 über nicht dargestellte Schrauben miteinander verbunden, welche in den dazu vorgesehenen Öffnungen 16 eingeschraubt werden. Zudem ist der Werkstückaufnahmeunterteil 2' mit dem Schwingkörper 8 und der Werkstückaufnahme 2 über (nicht dargestellte) Schrauben, die in den Aufnahmeöffnungen 17 eingeschraubt werden, miteinander verbunden.

In Fig. 5 ist insbesondere eine der Vorrichtung 1 zugeordnete Steuer- bzw. Regelvorrichtung 15 gezeigt, über welche ein Generator 15' angesteuert wird, der die Piezoelemente 10, 10' mit den entsprechenden elektrischen Impulsen versorgt, sodass die Schwingvorrichtung 9 mit der gewünschten Frequenz und der gewünschten Amplitude in Schwingung versetzt wird. Hierbei werden von den insgesamt 16 Piezoelementen, welche insgesamt aus 32 Piezostacks zusammengesetzt sind, jeweils acht Piezostacks gleich angesteuert (jeweils vier in eine Richtung), nämlich jene acht Piezostacks, die in den beiden an einer Längsseite vorgesehenen Piezoelementen 10, 10' und in den auf der gegenüberliegenden Seite angeordneten Piezoelementen 10, 10' aufgenommen sind.

Der von der Ausgleichsmasse 7 und dem Schwingkörper 8 zurückgelegte Weg und deren Beschleunigung wird sodann über Sensoren, u.a. über einen Weggeber 15'' (vgl. Fig. 4), aufgenommen, wobei über Leitungen 15''' der gemessene Weg bzw. die gemessene Beschleunigung zur Steuerung 15 übertragen wird, sodass ein Regelkreis geschlossen wird und somit eine aktiv gesteuerte Impulsentkoppelung erzielt wird, über welche zuverlässig gewünschte Resonanzschwingungen vermieden werden können. Der Steuer- bzw. Regeleinheit 15 ist eine Bedieneinheit 18 zugeschaltet, über welche der Bediener die gewünschte Frequenz, Amplitude, Schwingungsrichtung, etc. eingeben kann; ebenso ist der Steuer- bzw. Regeleinheit 15 eine numerische Steuerung 19 (NC-Einheit) einer Werkzeugmaschine 27 zugeschaltet.

In Fig. 6 ist schematisch eine fünfachsige Positionierungsvorrichtung 20 gezeigt, auf welcher die Vorrichtung 1 mit der Werkstückaufnahme 2 positioniert ist. Aufgrund der fünf Achsen 21, über welche die Positionsvorrichtung verstellt werden kann, kann eine mechanische Bearbeitung von komplexen 3D-Konturen des auf der Werkstückaufnahme 2 aufgenommenen Werkstücks erfolgen.

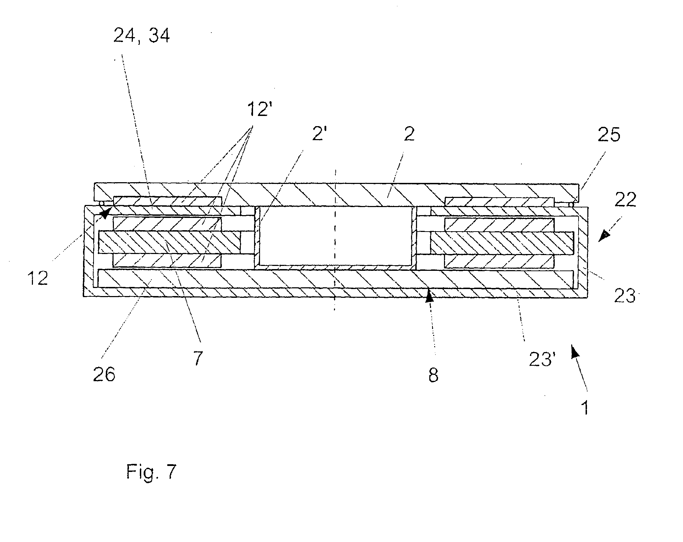

In Fig. 7 ist ein alternatives Ausführungsbeispiel der Vorrichtung 1 gezeigt. Hierbei ist ein Grundkörper 22 vorgesehen, der vorzugweise ein Gehäuse 23 mit einer Bodenfläche 23' aufweist, auf welchem eine Deckplatte 24 befestigbar ist. Auf der Deckplatte 24 ist die plattenförmige Werkstückaufnahme 2, auch Maschinentisch genannt, mittels eines Luftlagers 12 gelagert; hiezu sind Luftlager-Elemente 12' zwischen der Deckplatte 24 und der Werkstückaufnahme 2 angeordnet. Zudem ist ein Dichtelement 25 zwischen der Werkstückaufnahme 2 und der Deckplatte 24 ange-ordnet, um das Luftlager 12 vor dem Eindringen von Kühlschmierstoffen und Spänen zu schützen.

In dem Grundkörper 23 ist die Ausgleichsmasse 7 aufgenommen, die zur Impulsentkoppelung in entgegengesetzter Richtung zum Schwingkörper 8 schwingt; der Schwingkörper 8 weist hierbei eine Grundplatte 26 auf, die über ein vorzugsweise zylindrisches Verbindungselement 2' mit der plattenförmigen Werkstückaufnahme verbunden ist, die somit ebenfalls Teil des Schwingkörpers 8 ist. Der Schwingkörper 8 sowie die Ausgleichsmasse 7 sind - wie im Zusammenhang mit dem Ausführungsbespiel gemäß den Figuren 1 bis 5 bereits im Detail beschrieben - mit der Schwingvorrichtung 9 verbunden; d.h. am Schwingkörper 8 und an der Ausgleichsmasse 7 greifen in entgegengesetzter Richtung schwingende Piezoelemente 10, 10' an.

In den Figuren 8a bis 8d sind verschiedene Verwendungen der Vorrichtung 1 gezeigt, wobei die Vorrichtung jeweils in ein Basiskoordinatensystem (x, y, z) eingebracht ist. Die Schwingvorrichtung 9 verfügt selbst über ein Relativkoordinatensystem (x', y', z'), in welchem die Aktuatoren schwingen. Die Vorrichtung 1 kann somit - wie in den Figuren 8a bis 8d gezeigt - gegenüber dem Basiskoordinatensystem gekippt angeordnet sein; dies erfolgt um die Winkel ξ, η, ζ. Die Schwingbewegung erfolgt sodann in Richtung des Relativkoordinatensystems, wohingegen das Werkzeug 27' der Werkzeugmaschine 27 in beliebiger Richtung 29 im Basiskoordinatensystem, vorzugsweise entlang einer der Koordinatenhauptachse, bewegt werden kann. Durch die Winkelausrichtung kann nun die Schwingbewegung in jeglicher Konstellation zum Basiskoordinatensystem ausgerichtet werden. Wie in Fig. 8b ersichtlich kann ein auf der Werkstückaufnahme 2 befestigtes Werkstück 28 durch Winkelvorrichtungen 30 wiederum entlang der Ausrichtung aus dem Basiskoordinatensystem erfolgen.

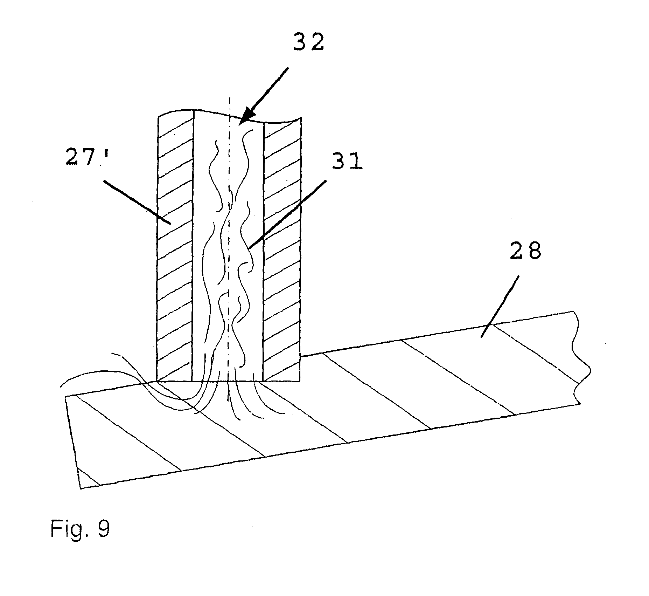

Insbesondere hat sich hierbei als vorteilhaft herausgestellt, dass eine Kühlflüssigkeit 31 (vgl. Fig. 9), die zur Kühlung des Werkzeugs 27' einer Werkzeugmaschine, z.B. einer Fräse 27, in den zu bearbeitenden Bereich zugeführt wird, bei der spanenden Bearbeitung von harten Platten 28, beispielsweise aus gehärtetem Stahl, keramischen Materialien oder dgl., in Schwingung versetzt wird. Hierdurch werden über das Werkzeug 27' entfernte Späne aufgrund der Schwingungen der Kühlflüssigkeit 31 deutlich besser abtransportiert. Die Kühlflüssigkeit 31 wird hierbei üblicherweise über einen im Werkzeug 27' ausgebildeten Kühlkanal 32 in den zu bearbeitenden Bereich zugeführt. Hierdurch ergeben sich somit aufgrund des verbesserten Spülverhaltens Möglichkeiten zur Steigerung der Schnittparameter, damit eine deutlich verkürzte Bearbeitungszeit und somit eine wesentliche Verringerung der Herstellungskosten.

## Patentansprüche

1. Vorrichtung (1) mit einer Werkstückaufnahme (2) zur Aufnahme eines mechanisch zu bearbeitenden Werkstücks (28), wobei mit der Werkstückaufnahme (2) zumindest eine Schwingvorrichtung (9) in Verbindung steht und die Schwingvorrichtung (9) die Werkstückaufnahme (2) in Schwingung versetzt, wobei die Schwingung der Werkstückaufnahme (2) eine Frequenz aufweist, die niedriger ist als die Frequenz von Ultraschall, **dadurch gekennzeichnet, dass** die Schwingvorrichtung (9) einen Schwingkörper (8) aufweist, dem eine in entgegengesetzter Richtung schwingende Ausgleichsmasse (7) zugeordnet ist.

2. Vorrichtung nach Anspruch 1, **dadurch gekennzeichnet, dass** die Frequenz der Schwingung der Werkstückaufnahme (2) unter 10 kHz, vorzugsweise unter 5 kHz, insbesondere unter 1 kHz, besonders bevorzugt zwischen 500 Hz und 50 Hz, beträgt.

3. Vorrichtung nach Anspruch 1 oder 2, **dadurch gekennzeichnet, dass** die Ausgleichsmasse (7) mit der gleichen Frequenz wie und einer größeren Amplitude als der Schwingkörper (8) schwingt.

4. Vorrichtung nach einem der Ansprüche 1 bis 3, **dadurch gekennzeichnet, dass** die Schwingvorrichtung (9) zumindest ein Piezoelement (10, 10') aufweist.

5. Vorrichtung nach Anspruch 4, **dadurch gekennzeichnet, dass** zur Verschiebung des Schwingkörpers (8) in einer Ebene zumindest zwei, vorzugsweise senkrecht zueinander angeordnete Bewegungsrichtungen aufweisende, Piezoelemente (10) vorgesehen sind.

6. Vorrichtung nach einem der Anspruch 4 oder 5, **dadurch gekennzeichnet, dass** an der Ausgleichsmasse (7) im Wesentlichen die gleiche Art und Anzahl an Piezoelementen (10') angreift wie an dem Schwingkörper (8).

7. Vorrichtung nach einem der Ansprüche 4 bis 6, **dadurch gekennzeichnet, dass** eine Steuer- bzw. Regelvorrichtung (11) vorgesehen ist, mit welcher gegengleiche Bewegungen der Piezoelemente (10), welche dem Schwingkörper (8) zugeordnet sind, und jener Piezoelemente (10'), die der Ausgleichsmasse (7) zugeordnet sind, gesteuert bzw. geregelt werden.

8. Vorrichtung nach Anspruch 7, **dadurch gekennzeichnet, dass** dem Schwingkörper (8) und der Ausgleichsmasse (7) Weg- und/oder Beschleunigungssensoren zugeordnet sind, deren Messwerte als Ist-Größen der Steuer- bzw. Regelvorrichtung (11) zugeführt werden.

9. Vorrichtung nach einem der Ansprüche 1 bis 8, **dadurch gekennzeichnet, dass** der Schwingkörper (8) und/oder die Ausgleichsmasse (7) auf zumindest einem Luftlager (12) gelagert sind.

10. Vorrichtung nach einem der Ansprüche 1 bis 9, **dadurch gekennzeichnet, dass** eine plattenförmige Werkstückaufnahme (2) vorgesehen ist, die auf eine Deckplatte (24) eines Grundkörpers, vorzugsweise mittels eines Luftlagers (12), gelagert ist.

11. Vorrichtung nach Anspruch 10, **dadurch gekennzeichnet, dass** die plattenförmige Werkstückaufnahme (2) mit einer Gegenplatte (26) fest verbunden ist, wobei zwischen der plattenförmigen Werkstückaufnahme (2) und der Gegenplatte die Ausgleichmasse (7) angeordnet ist.

12. Vorrichtung nach einem der Ansprüche 1 bis 11, **dadurch gekennzeichnet, dass** die Vorrichtung (1) auf einer Positioniervorrichtung (20) angeordnet ist.

13. Vorrichtung nach Anspruch 12, **dadurch gekennzeichnet, dass** bis zu fünf Achsen der Positioniervorrichtung (20) verstellbar sind.

14. Vorrichtung (1) nach einem der Ansprüche 1 bis 13, **dadurch gekennzeichnet, dass** zumindest eine Schwingungsrichtung (x', y', z')der Schwingvorrichtung (9) abweichend von einer Bewegungsrichtung (29) eines spanenden Werkzeugs (27'), vorzugsweise Fräswerkzeugs, ist.

15. Vorrichtung (1) nach einen der Ansprüche 1 bis 14, **dadurch gekennzeichnet, dass** ein mittels einer Kühlflüssigkeit (31) bzw. eines Kühlschmierstoffs gekühltes zur spanenden Bearbeitung vorgesehenes Werkzeug (27'), vorzugsweise Fräswerkzeug, vorgesehen ist.

16. Verfahren zur mechanischen Bearbeitung eines Werkstücks (28), wobei das Werkstück (28) in Schwingung versetzt wird und die Frequenz der Schwingung des Werkstücks (28) niedriger ist als die Frequenz von Ultraschall, **dadurch gekennzeichnet, dass** der von der Schwingung auf das Werkstück (28) eingeleitete Impuls mittels einer in entgegengesetzter Richtung schwingenden Ausgleichsmasse (7) aktiv entkoppelt wird.

17. Verfahren nach Anspruch 16, **dadurch gekennzeichnet, dass** die die Frequenz der Schwingung des Werkstücks (28) unter 10 kHz, vorzugsweise unter 5 kHz, insbesondere unter 1 kHz, besonders bevorzugt zwischen 500 Hz und 50 Hz, beträgt.

## Claims

1. A device (1) with a workpiece-receiving portion (2) for receiving a workpiece (28) to be mechanically machined, wherein at least one vibrating device (9) is connected to the workpiece-receiving portion (2), and the vibrating device (9) causes the workpiece-receiving portion (2) to vibrate, wherein the vibration of the workpiece-receiving portion (2) has a frequency that is lower than the frequency of ultrasound, **characterised in that** the vibrating device (9) has a vibrating body (8) to which a compensating mass (7) vibrating in the opposite direction is associated.

2. The device according to claim 1, **characterised in that** the frequency of the vibration of the workpiece-receiving portion (2) is below 10 kHz, preferably below 5 kHz, in particular below 1 kHz, especially preferably between 500 Hz and 50 Hz.

3. The device according to claim 1 or 2, **characterised in that** the compensating mass (7) vibrates at the same frequency as and with a higher amplitude than the vibrating body (8).

4. The device according to any one of claims 1 to 3, **characterised in that** the vibrating device (9) has at least one piezo element (10, 10').

5. The device according to claim 4, **characterised in that** for moving the vibrating body (8) in a plane, at least two piezo elements (10) having directions of movement that are preferably arranged vertically to one another are provided.

6. The device according to claim 4 or 5, **characterised in that** substantially the same type and number of piezo elements (10') engage the compensating mass (7) and the vibrating body (8).

7. The device according to any one of claims 4 to 6, **characterised in that** a control and/or regulating device (11) is provided for controlling and/or regulating opposite movements of the piezo elements (10) associated to the vibrating body (8) and the piezo elements (10') associated to the compensating mass (7).

8. The device according to claim 7, **characterised in that** distance and/or acceleration sensors are associated with the vibrating body (8) and the compensating mass (7), with the values measured being supplied to the control and/or regulating device (11) as actual values.

9. The device according to any one of claims 1 to 8, **characterised in that** the vibrating body (8) and/or the compensating mass (7) are supported on at least one air bearing (12).

10. The device according to any one of claims 1 to 9, **characterised in that** a plate-shaped workpiece-receiving portion (2) that is supported on a cover plate (24) of a base body, preferably by an air bearing (12), is provided.

11. The device according to claim 10, **characterised in that** the plate-shaped workpiece-receiving portion (2) is firmly connected to a counter plate (26), with the compensating mass (7) being arranged between the plate-shaped workpiece-receiving portion (2) and the counter plate.

12. The device according to any one of claims 1 to 11, **characterised in that** the device (1) is arranged on a positioning device (20).

13. The device according to claim 12, **characterised in that** up to five axes of the positioning device (20) are adjustable.

14. The device (1) according to any one of claims 1 to 13, **characterised in that** at least one vibrating direction (x', y', z') of the vibrating device (9) deviates from a direction of movement (29) of a chip-removing tool (27'), preferably a milling tool.

15. The device (1) according to any one of claims 1 to 14, **characterised in that** a tool (27'), preferably a milling tool, provided for chip-removing machining is provided, which is cooled by a cooling liquid (31) and/or a cooling grease.

16. A method for mechanically machining a workpiece (28), wherein the workpiece (28) is caused to vibrate and the frequency of the vibration of the workpiece (28) is lower than the frequency of ultrasound, **characterised in that** the momentum introduced into the workpiece (28) by the vibration is actively decoupled by means of a compensating mass (7) vibrating in the opposite direction.

17. The method according to claim 16, **characterised in that** the frequency of the vibration of the workpiece (28) is below 10 kHz, preferably below 5 kHz, in particular below 1 kHz, especially preferably between 500 Hz and 50 Hz.

## Revendications

1. Dispositif (1) comprenant un logement pour pièces à usiner (2) servant à loger une pièce à usiner (28) à usiner mécaniquement, sachant qu'au moins un dispositif oscillant (9) est relié au logement pour pièces à usiner (2) et que le dispositif oscillant (9) entraîne l'oscillation du logement pour pièces à usiner (2), sachant que l'oscillation du logement pour pièces à usiner (2) présente une fréquence, qui est inférieure à la fréquence des ultrasons, **caractérisé en ce que** le dispositif d'oscillation (9) présente un corps oscillant (8), auquel est associée une masse d'équilibrage (7) qui oscille dans le sens opposé.

2. Dispositif selon la revendication 1, **caractérisé en ce que** la fréquence de l'oscillation du logement pour pièces à usiner (2) est inférieure à 10 kHz, de préférence inférieure à 5 kHz, en particulier inférieure à 1 kHz, et de manière particulièrement préférée comprise entre 500 Hz et 50 Hz.

3. Dispositif selon la revendication 1 ou 2, **caractérisé en ce que** la masse d'équilibrage (7) oscille à la même fréquence que le corps oscillant (8) et à une amplitude plus importante que celle du corps oscillant (8).

4. Dispositif selon l'une quelconque des revendications 1 à 3, **caractérisé en ce que** le dispositif oscillant (9) présente au moins un élément piézoélectrique (10, 10').

5. Dispositif selon la revendication 4, **caractérisé en ce qu'**au moins deux éléments piézoélectriques (10) présentant des sens de déplacement agencés de préférence de manière perpendiculaire les uns aux autres sont prévus aux fins du déplacement par coulissement du corps oscillant (8) dans un plan.

6. Dispositif selon l'une quelconque de la revendication 4 ou 5, **caractérisé en ce que** sensiblement le même type et le même nombre d'éléments piézoélectriques (10') viennent en prise au niveau de la masse d'équilibrage (7) et au niveau du corps oscillant (8).

7. Dispositif selon l'une quelconque des revendications 4 à 6, **caractérisé en ce qu'**un dispositif de commande ou de réglage (11) est prévu, lequel permet de commander ou de régler des mouvements diamétralement opposés des éléments piézoélectriques (10) qui sont associés au corps oscillant (8), et desdits éléments piézoélectriques (10') qui sont associés à la masse d'équilibrage (7).

8. Dispositif selon la revendication 7, **caractérisé en ce que** des capteurs de trajectoire et/ou d'accélération sont associés au corps oscillant (8) et à la masse d'équilibrage (7), dont les valeurs de mesure sont fournies en tant que grandeurs réelles du dispositif de commande ou de réglage (11).

9. Dispositif selon l'une quelconque des revendications 1 à 8, **caractérisé en ce que** le corps oscillant (8) et/ou la masse d'équilibrage (7) sont logés sur au moins un palier à air (12).

10. Dispositif selon l'une quelconque des revendications 1 à 9, **caractérisé en ce qu'**un logement pour pièces à usiner (2) présentant une forme de plateau est prévu, lequel est logé sur un plateau de recouvrement (24) d'un corps de base, de préférence au moyen d'un palier à air (12).

11. Dispositif selon la revendication 10, **caractérisé en ce que** le logement pour pièces à usiner (2) présentant une forme de plateau est relié de manière solidaire à un plateau complémentaire (26), sachant que la masse d'équilibrage (7) est disposée entre le logement pour pièces à usiner (2) présentant une forme de plateau et le plateau complémentaire.

12. Dispositif selon l'une quelconque des revendications 1 à 11, **caractérisé en ce que** le dispositif (1) est disposé sur un dispositif de positionnement (20).

13. Dispositif selon la revendication 12, **caractérisé en ce qu'**il est possible d'ajuster jusqu'à cinq axes du dispositif de positionnement (20).

14. Dispositif (1) selon l'une quelconque des revendications 1 à 13, **caractérisé en ce qu'**au moins un sens d'oscillation (x', y', z') du dispositif oscillant (9) diverge d'un sens de déplacement (29) d'un outil (27') d'usinage par enlèvement de copeaux, de préférence d'une fraise.

15. Dispositif (1) selon l'une quelconque des revendications 1 à 14, **caractérisé en ce qu'**est prévu un outil (27'), de préférence une fraise, prévu aux fins de l'usinage par enlèvement de copeaux, refroidi au moyen d'un liquide de refroidissement (31) ou au moyen d'un réfrigérant lubrifiant.

16. Procédé servant à l'usinage mécanique d'une pièce à usiner (28), la pièce à usiner (28) étant amenée à osciller et la fréquence de l'oscillation de la pièce à usiner (28) étant inférieure à la fréquence des ultrasons, **caractérisé en ce que** l'impulsion donnée par l'oscillation à la pièce à usiner (28) est activement découplée au moyen d'une masse d'équilibrage (7) oscillant dans le sens opposé.

17. Procédé selon la revendication 16, **caractérisé en ce que** la fréquence de l'oscillation de la pièce à usiner (28) est inférieure à 10 kHz, de préférence inférieure à 5 kHz, en particulier inférieure à 1 kHz, et de manière particulièrement préférée comprise entre 500 Hz et 50 Hz.
